# EUROPÄISCHE PATENTANMELDUNG

(11) **EP 4 216 327 A1**
(43) Veröffentlichungstag der Anmeldung: **26.07.2023**
(21) Anmeldenummer: 22152468.9
(22) Anmeldetag: 20.01.2022
(51) Int. Cl.: H01M 10/04, H01M 50/609

(54) **VERFAHREN UND VORRICHTUNG ZUR THERMISCHEN TROCKNUNGSBEHANDLUNG VON ELEKTRODEN-SEPARATOR-VERBÜNDEN MITTELS INDUKTION**

(71) Anmelder: VARTA Microbattery GmbH, 73479 Ellwangen Jagst (DE)
(72) Erfinder: Elmer, Martin, 73479 Ellwangen (DE); Kloos, Dieter, 74579 Fichtenau (DE); Stern, Rainer, 73479 Ellwangen (DE)
(74) Vertreter: Ostertag & Partner Patentanwälte mbB

(57) **Zusammenfassung**

Es werden ein Verfahren und eine Vorrichtung zur thermischen Trocknungsbehandlung einer Mehrzahl von Elektroden-Separator-Verbünden (10) vorgeschlagen. Die Verbünde weisen jeweils mindestens eine negative und mindestens eine positive Elektrode, die jeweils einen mit Elektrodenaktivmaterial beschichteten metallischen Stromkollektor, nämlich einen Anodenstromkollektor und einen Kathodenstromkollektor, umfassen, auf. Bei der thermischen Trocknungsbehandlung werden alle Verbünde gleichzeitig getrocknet. Die Trocknung erfolgt mittels mehrerer Induktoren (20), mit welchen die Elektroden-Separator-Verbünde (10) induktiv erwärmt werden. Bei dem Verfahren werden mehrere Elektroden -Separator-Verbünde (10) in einer Trocknungsvorrichtung im Wirkbereich der Induktoren (20) platziert. Für die thermische Trocknungsbehandlung wird ein Vakuum angelegt und die Induktoren (20) werden mit Strom beaufschlagt. Das Verfahren ist weiter dadurch gekennzeichnet, dass jeder der zu trocknenden Elektroden-Separator-Verbünde (10) in der Trocknungsvorrichtung genau einem Induktor (20) zugeordnet wird.

## Beschreibung

Die vorliegende Erfindung betrifft ein Verfahren zur thermischen Trocknungsbehandlung einer Mehrzahl von Elektroden-Separator-Verbünden sowie eine Trocknungsvorrichtung zur Durchführung des Verfahrens.

### ANWENDUNGSGEBIET UND STAND DER TECHNIK

Elektrochemische Energiespeicherelemente sind dazu in der Lage, gespeicherte chemische Energie durch eine Redoxreaktion in elektrische Energie umzuwandeln. Die einfachste Form eines elektrochemischen Energiespeicherelements ist die elektrochemische Zelle. Sie umfasst eine positive Elektrode und eine negative Elektrode, die von einem Separator voneinander getrennt sind. Bei einer Entladung werden an der negativen Elektrode durch einen Oxidationsprozess Elektronen freigesetzt. Hieraus resultiert ein Elektronenstrom, der von einem externen elektrischen Verbraucher abgegriffen werden kann, für den die elektrochemische Zelle als Energielieferant dient. Zugleich kommt es zu einem der Elektrodenreaktion entsprechenden lonenstrom innerhalb der Zelle. Dieser lonenstrom durchquert den Separator und wird durch einen ionenleitenden Elektrolyten ermöglicht.

Wenn die Entladung des elektrochemischen Energiespeicherelements reversibel ist, also die Möglichkeit besteht, die bei der Entladung erfolgte Umwandlung von chemischer Energie in elektrische Energie wieder umzukehren und die Zelle bzw. das Element wieder zu laden, spricht man von einem sekundären Energiespeicherelement. Die bei sekundären Energiespeicherelementen allgemein übliche Bezeichnung der negativen Elektrode als Anode und die Bezeichnung der positiven Elektrode als Kathode bezieht sich auf die Entladefunktion des elektrochemischen Energiespeicherelements.

Vorliegend wird unter dem Begriff "elektrochemisches Energiespeicherelement" nicht nur eine einzelne elektrochemische Zelle verstanden, sondern auch eine Batterie, die eine Mehrzahl einzelner elektrochemischer Zellen umfasst.

Unter den bekannten sekundären elektrochemischen Energiespeicherelementen werden vergleichsweise hohe Energiedichten insbesondere von Lithium-lonen-Zellen erreicht. Neben der Verwendung von Zellenstapeln, die aus mehreren Einzelzellen mit jeweils mindestens einer positiven und mindestens einer negativen Elektrode bestehen, sind Lithium-lonen-Zellen mit einem wickelförmigen Elektroden-Separator-Verbund weit verbreitet. Ein solcher Verbund weist oftmals die Sequenz "positive Elektrode / Separator / negative Elektrode" auf. Weiterhin können solche Einzelzellen als sogenannte Bizellen mit den möglichen Sequenzen "negative Elektrode / Separator / positive Elektrode/Separator/ negative Elektrode" oder"positive Elektrode/Separator/ negative Elektrode / Separator / positive Elektrode" aufgebaut sein.

Die Elektroden von Lithium-lonen-Zellen umfassen üblicherweise metallische Stromkollektoren, die meist in Form von Folien, Netzen, Gittern, Schäumen, Vliesen oder Filzen vorliegen. Im Fall der positiven Elektrode werden als Stromkollektoren meist Netze oder Folien aus Aluminium, beispielsweise aus Aluminiumstreckmetall oder aus einer Aluminiumfolie, eingesetzt. Auf der Seite der negativen Elektrode werden als Stromkollektoren meist Netze oder Folien aus Kupfer verwendet.

In der Regel werden die beschriebenen Zellen für Lithium-lonen-Energiespeicherelemente in einem mehrstufigen Verfahren produziert. Üblich ist, dass in einem ersten Schritt die Elektroden hergestellt werden, die dann anschließend mit einem oder mehreren Separatoren zu den erwähnten Elektroden-Separator-Verbünden kombiniert werden. Elektroden und Separatoren können lose gestapelt oder gewickelt werden oder auch in einem Laminationsschritt miteinander verbunden werden.

Zur Herstellung der Elektroden für Lithium-lonen-Zellen werden aus meist pastenförmigen Zusammensetzungen, die ein geeignetes elektrochemisch aktives Material (kurz "Aktivmaterial") umfassen, auf den Stromkollektoren dünne Elektrodenfilme gebildet, beispielsweise mittels einer Rakel oder mittels einer Breitschlitzdüse. Für die Elektroden eines Lithium-lonen-Zelle geeignete Aktivmaterialien müssen Lithium-lonen aufnehmen und wieder abgeben können, die beim Laden bzw. Entladen von der negativen zur positiven Elektrode (und umgekehrt) wandern.

Als für negative Elektroden von Lithium-lonen-Zellen geeignete Aktivmaterialien kommen insbesondere graphitischer Kohlenstoff oder zur Interkalation von Lithium befähigte nicht-graphitische Kohlenstoffmaterialien in Frage. Weiterhin können auch metallische und halbmetallische Materialien, die mit Lithium legierbar sind, zum Einsatz kommen. So sind beispielsweise die Elemente Zinn, Antimon und Silizium in der Lage, mit Lithium intermetallische Phasen zu bilden. Insbesondere können die kohlenstoffbasierten Aktivmaterialien mit den metallischen und/oder halbmetallischen Materialien auch kombiniert werden.

Für positive Elektroden eignen sich insbesondere Lithiumcobaltoxid (LCO) mit der Summenformel LiCoO₂, Lithiumnickelmangancobaltoxid (NMC) mit der Summenformel LiNiₓMn_{y}Co_{z}O₂, Lithiummanganspinell (LMO) mit der Summenformel LiMn₂O₄, Lithiumeisenphosphat (LFP) mit der Summenformel LiFePO₄ oder Lithiumnickelcobaltaluminiumoxid mit der Summenformel LiNiₓCO_{y}Al_{z}O₂ (NCA). Auch Mischungen der genannten Materialien können eingesetzt werden.

Neben den Aktivmaterialien enthalten die meist pastenförmigen Zusammensetzungen in der Regel noch einen Elektrodenbinder (kurz "Binder"), einen Leitfähigkeitsverbesserer, ein Lösungs- und/oder Suspensionsmittel sowie gegebenenfalls noch Additive, beispielsweise zur Beeinflussung ihrer Verarbeitungseigenschaften. Ein Elektrodenbinder bildet eine Matrix, in die das Aktivmaterial sowie gegebenenfalls der Leitfähigkeitsverbesserer eingelagert sein können. Die Matrix soll für eine erhöhte strukturelle Stabilität während durch die Lithiierung und Delithiierung verursachten Volumenexpansionen und -kontraktionen sorgen. Als Lösungs- und/oder Suspensionsmittel kommen z.B. Wasser oder organische Lösungsmittel wie N-Methyl-2-Pyrrolidon (NMP) oder N-Ethyl-2-Pyrrolidon (NEP) in Frage. Ein Beispiel für einen wässrig prozessierbaren Binder ist Natrium-Carboxymethylzellulose (Na-CMC). Ein Beispiel für einen in organischen Lösungsmitteln prozessierbaren Binder ist Polyvinylidendifluorid (PVDF). Als Additive können z.B. Rheologiehilfsmittel zugesetzt werden. Bei dem Leitfähigkeitsverbesserer handelt es sich meist um ein elektrisch leitfähiges kohlenstoffbasiertes Material, insbesondere um Leitruß, Leitgraphit, Kohlenstofffasern oder Kohlenstoffnanoröhrchen.

In den Zusammensetzungen enthaltenes Lösungs- und/oder Suspensionsmittel findet sich üblicherweise in den auf den Stromkollektoren gebildeten Elektrodenfilmen wieder und muss aus diesen entfernt werden. Die trockenen Elektrodenfilme können dann verdichtet werden, beispielsweise in einem Kalandrierprozess. Die so gebildeten Elektroden können zu den eingangs erwähnten Zellen verbaut werden.

Das Trocknen von auf Stromkollektoren gebildeten Elektrodenfilmen, also das Entfernen des in den Elektrodenfilmen enthaltenen Lösungs- und/oder Suspensionsmittels, sowie die Entfernung von später gegebenenfalls noch vorhandener Restfeuchte in den Elektroden-Separator-Verbünden ist zeit- und energieaufwendig. Herkömmlicherweise kann die Trocknung der Elektrodenfilme mittels eines temperierten Gases, insbesondere mittels temperierter Luft, erfolgen. Das Gas erwärmt den Elektrodenfilm, so dass darin enthaltenes Lösungs- und/oder Suspensionsmittel oder gegebenenfalls noch vorhandene Restfeuchte verdunstet und entweicht. Die Erwärmung erfolgt dabei zunächst an der Oberfläche des Elektrodenfilms und breitet sich dann graduell ins Innere des Films aus. Entsprechend schreitet auch die Trocknung graduell von außen nach innen fort; eine außenliegende Schicht des Elektrodenfilms kann bereits getrocknet sein, während der Elektrodenfilm in einer an den Stromkollektor angrenzenden Schicht noch erhebliche Mengen an Lösungs- und/oder Suspensionsmittel enthält. Dies kann insoweit problematisch sein, als beim Entfernen des Lösungs- und/oder Suspensionsmittels häufig ein filmartiger Rückstand verbleibt. Wird dieser in einer außenliegenden Schicht des Elektrodenfilms gebildet, so kann dieser eine weitere Trocknung des Elektrodenfilms erheblich verzögern, da Lösungs- und/oder Suspensionsmittel aus der an den Stromkollektor angrenzenden Schicht nicht mehr problemlos austreten kann. Unter Umständen können sich sogar Blasen bilden. Dem versucht man insbesondere durch ausreichend lange Trocknungszeiten entgegenzuwirken. Bei langsamer Trocknung tritt der beobachtete Trocknungsgradient nur in geringem Umfang auf. Allerdings erhöht die gezielt verlangsamte Trocknung den ohnehin bereits erheblichen anfallenden Zeitaufwand.

Im Rahmen des Herstellungsprozesses von Lithium-lonen-Zellen ist es vor allem auch wichtig, vor einer Befüllung der Zelle mit Elektrolyt jegliche Restfeuchte aus den Elektroden-Separator-Verbünden zu entfernen. Herkömmlicherweise erfolgt dies über einen Ofenprozess, wobei hier in der Regel Vakuumöfen verwendet werden, in denen entweder die Elektroden vor dem Wickelprozess oder die wickelförmigen Elektroden-Separator-Verbünde in einem Gehäusebecher direkt vor der Elektrolytbefüllung getrocknet werden. Für eine Massenproduktion wird dabei üblicherweise ein Batch, der in der Regel aus mehreren Hundert Zellen besteht, in einem Träger (*tray*) für mehrere Stunden auf ca. 100 °C erwärmt, so dass jegliche vorhandene Feuchtigkeit entfernt wird. Üblicherweise werden dabei mehrere Zyklen aus Vakuum und Stickstoffspülungen absolviert, um die Feuchtigkeit aus der Ofenkammer herauszuziehen.

Dieses Vorgehen ist jedoch mit verschiedenen Herausforderungen verbunden. Zunächst ist allgemein die Einbringung der Wärme in einen solchen Ofen schwierig, da im Vakuum nicht direkt mit einer Umwälzung des Trocknungsmediums gearbeitet werden kann. Eine gleichzeitige und dabei homogene Erwärmung der Zellen ist daher schwierig. Nur wenn zusätzlich Stickstoff oder anderes Gas zugegeben wird, ist eine gleichmäßige Erwärmung möglich.

Weiterhin ist es problematisch, dass bei einem solchen herkömmlichen Ofenprozess die Erhitzung über Kontaktwärme erfolgt, indem die Zellen z. B. auf einer heißen Trägerplatte des Ofens stehen. Im Vakuum können dabei Unebenheiten zwischen der Platte und den Zellen die Wärmeübertragung stören, da im Vakuum kein Wärmetransport durch Konvektion stattfindet und das Vakuum sogar isolierend wirkt. Es kommt daher leicht zu einer ungleichmäßigen Erwärmung der Zellen.

Weiterhin ist bei einem herkömmlichen Ofenprozess zu beachten, dass die Zellen nicht zu stark erhitzt werden dürfen, da sonst Schädigungen an den Zellen, insbesondere eine Schädigung des Separators, auftreten können. Dies ist bei der Erwärmung mittels einer herkömmlichen Heizplatte aufgrund der dabei auftretenden Wärme- und Zeitverluste schwierig, so dass es zum Teil zu einem Überschwingen der Temperatur kommt, was mit Qualitätsverlusten bei den zu trocknenden Zellen verbunden sein kann.

Bei einem herkömmlichen Ofenprozess ist es weiterhin problematisch, wenn in dem Ofen ein Elektroden-Separator-Verbund getrocknet werden soll, der sich bereits in einem Zellenbecher bzw. in einem Gehäusebecher befindet. Hierbei erfolgt in erster Linie eine Erwärmung des Zellenbechers. Eine direkte Wärmeleitung zu den Elektroden und Stromkollektoren erfolgt dabei vor allem über Anschweißpunkte der Elektroden oder über gegebenenfalls vorhandene metallische Kontaktbleche. Die Wärmeübertragung ist dabei schlecht. Hinzu kommt, dass zwischen Becherinnenseite und Elektroden-Separator-Verbund oftmals ein kleiner Freiraum vorhanden ist, der eine Wärmeübertragung zusätzlich hemmt.

Schließlich ist bei einem herkömmlichen Ofenprozess eine Homogenität der Trocknungsbehandlung über das gesamte Batch der Zellen schwierig. Im Allgemeinen erreichen außenliegende Zellen eines Batches eine andere Temperatur als die innenliegenden Zellen während des Trocknungsprozesses. Während der Trocknungsbehandlung darf die Temperatur auf der einen Seite nicht zu hoch sein, um nicht eine Schädigung insbesondere des Separators zu bewirken. Auf der anderen Seite darf die Temperatur nicht zu niedrig sein, damit die Feuchtigkeit sicher verdampft. Insgesamt ist das einzuhaltende Temperaturfenster sehr klein und es ist schwierig, das erforderliche Temperaturfenster für einen ausreichenden Zeitraum bei allen Zellen des Batches zu erreichen.

Es ist bereits bekannt, eine Trocknung von Elektroden durch Erwärmung mittels induktiv erzeugter Wirbelströme zu bewirken. So beschreibt die EP 3 439 079 B1 ein Verfahren zur thermischen Behandlung von Elektrodenfilmen auf einem metallischen Stromkollektor, bei dem der Stromkollektor mittels einer Induktionseinrichtung induktiv erwärmt wird. Allerdings bietet das dort beschriebene Verfahren in erster Linie eine Lösung zur Trocknung von Elektrodenbändern unmittelbar nach deren Beschichtung. Für eine gleichzeitige Trocknung einer Vielzahl von bereits gewickelten Elektroden-Separator-Verbünden sind mit diesem Verfahren keine befriedigenden Ergebnisse zu erwarten.

### AUFGABE UND LÖSUNG

Vor diesem Hintergrund stellt sich die Erfindung die Aufgabe, ein verbessertes Verfahren und eine entsprechende Vorrichtung zur Trocknung von Elektroden-Separator-Verbünden bereitzustellen, mit dem bzw. der eine schnelle und gleichmäßige Trocknung einer großen Anzahl von Elektroden-Separator-Verbünden und insbesondere eine Entfernung von Restfeuchte im Rahmen des Herstellungsprozesses von Lithium-lonen-Energiespeicheretementen durchgeführt werden kann. Darüber hinaus soll das Verfahren im Vergleich zu herkömmlichen Prozessen schneller und effektiver sein und dabei gleichzeitig eine Energieeinsparung ermöglichen.

Diese Aufgabe wird durch ein Verfahren gelöst, wie es sich aus dem Anspruch 1 ergibt. Weiterhin wird diese Aufgabe durch eine Trocknungsvorrichtung gemäß dem weiteren unabhängigen Anspruch gelöst. Bevorzugte Ausgestaltungen und Ausführungsformen des Verfahrens bzw. der Trocknungsvorrichtung sind Gegenstand der abhängigen Ansprüche.

Das erfindungsgemäße Verfahren dient zur gleichzeitigen thermischen Trocknungsbehandlung einer Mehrzahl von Elektroden-Separator-Verbünden. Die Mehrzahl der Elektroden-Separator-Verbünden kann insbesondere in Form eines Batches gleichzeitig getrocknet werden.

Die Elektroden-Separator-Verbünde umfassen jeweils mindestens eine positive und mindestens eine negative Elektrode sowie mindestens einen Separator. Die Elektroden selbst umfassen jeweils einen mit Elektrodenaktivmaterial beschichteten metallischen Stromkollektor. Im Fall der negativen Elektrode handelt es sich um einen Anodenstromkollektor und im Fall der positiven Elektrode um einen Kathodenstromkollektor. Die thermische Trocknungsbehandlung erfolgt mittels Induktoren vorzugsweise kontaktlos. Hierbei werden die Elektroden-Separator-Verbünde gleichzeitig bevorzugt induktiv erwärmt, ohne dass es zu einem unmittelbaren Kontakt mit den Induktoren kommt.

Das erfindungsgemäße Verfahren umfasst die folgenden Schritte:
a. Die Mehrzahl von Elektroden-Separator-Verbünden wird in einer Trocknungsvorrichtung im Wirkbereich der Induktoren platziert,
b. für die thermische Trocknungsbehandlung wird ein Vakuum angelegt, und
c. die Induktoren werden mit Strom beaufschlagt.

Das erfindungsgemäße Verfahren ist weiter dadurch gekennzeichnet, dass
d. jedem der zu trocknenden Elektroden-Separator-Verbünde in der Trocknungsvorrichtung genau einem Induktor zugeordnet wird.

Das erfindungsgemäße Verfahren basiert auf der Erzeugung eines magnetischen Wechselfelds durch den Induktor, das auf die metallischen Bestandteile der Elektroden-Separator-Verbünde, insbesondere auf die Stromkollektoren, wirken kann. Die hierdurch erzeugten Wirbelströme in den metallischen Bestandteilen führen zu einer Erwärmung, die wiederum vorhandene Feuchtigkeit in auf den Stromkollektoren abgeschiedenen Elektrodenfilmen verdampfen lässt. Im Vergleich mit herkömmlichen Ofenprozessen erfolgt die Erwärmung wesentlich direkter und schneller, so dass mit dem erfindungsgemäßen Verfahren eine erhebliche Zeitersparnis möglich ist.

Gemäß dem induktiven Prinzip des erfindungsgemäßen Verfahrens werden die Induktoren mit einem Wechselstrom beaufschlagt. Je nach Frequenz und/oder Amplitude des Wechselstroms kann die Temperatur bei der Trocknungsbehandlung entsprechend in der gewünschten Weise eingestellt werden.

Das Anlegen eines Vakuums erfolgt in an sich bekannter Weise, wie es auch beispielsweise von herkömmlichen Ofenprozessen bekannt ist. Insbesondere wird hierfür eine Vakuumpumpe eingesetzt, die einen Unterdruck erzeugt, also einen Druck, der geringer als der Umgebungsdruck ist. Vorzugsweise wird dabei ein Druck unterhalb von 300 mbar eingestellt, beispielsweise ein Druck in einem Bereich zwischen 20 mbar und 100 mbar.

Im Unterschied zu herkömmlichen Trocknungsverfahren von Elektroden, die bereits auf induktiver Basis arbeiten, liegt der Kern des erfindungsgemäßen Verfahrens vor allem darin, dass jeder zu trocknende Elektroden-Separator-Verbund jeweils einem Induktor zugeordnet wird, um eine sehr gezielte und gerichtete Erwärmung des Elektroden-Separator-Verbunds zu erreichen. Damit kann in besonders effektiver Weise und in gleichzeitig energiesparender Weise jegliche vorhandene Restfeuchte in dem Elektroden-Separator-Verbund sicher und in kurzer Zeit entfernt werden.

Das erfindungsgemäße Verfahren kann für einzelne Elektroden-Separator-Verbünde gegebenenfalls individuell gesteuert und/oder geregelt werden, so dass keine schädigenden Übertemperaturen bei einzelnen Zellen auftreten. Weiterhin wird mit dem erfindungsgemäßen Verfahren eine große Homogenität der Erwärmung über ein gesamtes Batch erreicht, da durch die individuelle Erwärmung der einzelnen Elektroden-Separator-Verbünde über einzelne Induktoren mechanische und magnetische Toleranzen ausgeglichen werden können. Jeder Elektroden-Separator-Verbund im Batch kann in gleichmäßiger Weise erwärmt und getrocknet werden, so dass es nicht zur Ausbildung von Hotspots oder anderen ungleichmäßigen Wärmeverteilungen im Batch kommt.

Auch die Konstruktion einer entsprechenden Trocknungsvorrichtung ist im Vergleich mit herkömmlichen Trocknungsöfen wesentlich leichter und mit weniger Materialeinsatz möglich. Insbesondere ist kein Leitmedium, wie beispielsweise Öl oder Wasser, notwendig, was bei herkömmlichen Ofenprozessen zum Erwärmen der Ofenschubladen genutzt werden kann.

Weiterhin erlaubt das erfindungsgemäße Verfahren prinzipiell, dass in einer Trocknungsvorrichtung unterschiedliche Trocknungskurven für unterschiedliche Typen von Elektroden-Separator-Verbünden gefahren werden, zum Beispiel Trocknungskurven für einen Energietyp und andere Trocknungskurven für einen Leistungstyp bei den Elektroden-Separator-Verbünden, da die einzelnen Induktoren individuell betrieben werden können.

Vor allem erlaubt das erfindungsgemäße Verfahren eine wesentliche Energieeinsparung im Vergleich mit herkömmlichen Verfahren. Im Vergleich mit einem herkömmlichen Ofenprozess, bei dem in der Regel auch Trägermittel für die Zellen, z.B. Paletten, mit erwärmt werden müssen, sind Energieeinsparungen im Bereich von 50 % bis 75 % möglich.

Zur Einbringung und Platzierung der Elektroden-Separator-Verbünde können die einzelnen Elektroden-Separator-Verbünde beispielsweise direkt in die Trocknungseinrichtung hineingeschoben und im Wirkbereich des jeweiligen Induktors platziert werden. Dabei ist die Verwendung einer Trägerpalette wie bei herkömmlichen Prozessen nicht unbedingt erforderlich, so dass der Arbeitsschritt der Einlagerung und Umlagerung der Elektroden-Separator-Verbünde in und aus den Trägerpaletten entfällt. Da der Induktor die zum Trocknen erforderliche Energie berührungslos überträgt, können die Anforderungen an die Qualität, insbesondere die Ebenheit der Oberfläche, auf der die Elektroden-Separator-Verbünde angeordnet werden, relativ klein sein. Aufgrund der berührungslosen

Übertragung spielen gegebenenfalls vorhandene Unebenheiten keine Rolle. Im Fall von Kontaktwärme ist die Größe der Kontaktfläche hingegen entscheidend.

In anderen bevorzugten Ausführungsformen können Produktträger, beispielsweise Transportbecher (*Pucks*) oder andere Trägermittel, verwendet. Zweckmäßigerweise sind diese Produktträger aus elektrisch nicht leitendem Material, z. B. aus Kunststoff, so dass sie mit dem induktiven Erwärmungsprozess nicht wechselwirken und nicht mit erwärmt werden und daher keine Energieverluste bewirken.

Bei herkömmlichen Ofenprozessen ist die Verwendung von Trägerpaletten auch im Hinblick auf den damit verbundenen zusätzlichen Energiebedarf bei der Erwärmung und Abkühlung nachteilig, da die Trägerpaletten zusammen mit den zu behandelnden Elektroden-Separator-Verbunden zwangsläufig erwärmt werden. Bei dem erfindungsgemäßen Verfahren können ausschließlich die Elektroden-Separator-Verbünde gezielt erwärmt werden. Auch wenn Produktträger verwendet werden, erfolgt bei entsprechender Materialwahl fürdie Produktträger keine Erwärmungder Produktträger, so dass das erfindungsgemäße Verfahren im Vergleich mit herkömmlichen Verfahren wesentlich zeit- und energiesparender ist.

Wenn die zu behandelnden Elektroden-Separator-Verbünde direkt oder getragen von individuellen Produktträgern in die Trocknungsvorrichtung eingeschoben werden, können die Elektroden-Separator-Verbünde auf einer Fläche mit den Induktoren, insbesondere einer Trägerplatte der Trocknungsvorrichtung, derart aufgestaut werden, dass die einzelnen Elektroden-Separator-Verbünde jeweils oberhalb eines Induktors platziert werden.

Nach der Platzierung der zu behandelnden Elektroden-Separator-Verbünde kann sich beispielsweise eine Vakuumhaube über die zu behandelnden Elektroden-Separator-Verbünden absenken und der Trocknungsprozess kann gestartet werden.

Nach der Beendigung des Erwärmungsprozesses können die einzelnen Elektroden-Separator-Verbünde beispielsweise mit einem Schieber weiterbefördert und wieder vereinzelt werden. Gegenüber einem Handling mit einer Trägerpalette bietet dies erhebliche Vorteile für die weitere Prozessierung der Elektroden-Separator-Verbünde.

In besonders bevorzugten Ausführungsformen zeichnet sich das Verfahren durch mindestens eines der folgenden zusätzlichen Merkmale aus:
a. Die Elektroden-Separator-Verbünde werden auf eine Temperatur oberhalb von 99 °C und unterhalb der Schmelztemperatur des Separators der Elektroden-Separator-Verbünde erwärmt.
b. Die Elektroden-Separator-Verbünde werden auf eine Temperatur in einem Bereich von 100 °C bis 110 °C erwärmt.

Vorzugsweise sind die vorgenannten Merkmale a. und b. in Kombination miteinander verwirklicht.

Für eine effektive Erwärmung, die zu einer Verdunstung von vorhandener Restfeuchte führt, ist es ideal, eine Temperatur oberhalb des Siedepunkts der Feuchte bzw. der Restfeuchte bei der Trocknungsbehandlung zu erreichen. Vorzugsweise wird daher eine Temperatur von 100 °C oder höher eingestellt. Zweckmäßigerweise wird der angestrebte Temperaturbereich dabei so gewählt, dass es nicht zu Schädigungen an den zu behandelnden Elektroden-Separator-Verbünden kommt. Die kritische Komponente ist hierbei im Allgemeinen der Separator, der beispielsweise aus mikroporösen Kunststoffen oder aus Vliesen aus Glasfaser oder Polyethylen aufgebaut sein kann. Der Separator kann beispielsweise auch aus Vliesstoffen bestehen, die keramisch beschichtet sind. Um eine Schädigung der Elektroden-Separator-Verbünde sicher zu vermeiden, ist daher insbesondere ein Temperaturbereich von 100 °C bis 110 °C für die Trocknungsbehandlung besonders geeignet.

Gegenüber herkömmlichen Ofenprozessen kann die Zeitdauer für die Trocknungsbehandlung bei dem erfindungsgemäßen Verfahren durch die besonders gezielte und effektive Erwärmung der Elektroden erheblich reduziert werden.

In besonders bevorzugten Ausführungsformen zeichnet sich das erfindungsgemäße Verfahren durch mindestens eines der folgenden zusätzlichen Merkmale aus:
a. Die Elektroden-Separator-Verbünde sind jeweils als Wickel ausgebildet und weisen eine zylindrische Grundform mit zwei endständigen Stirnseiten auf.
b. Die Elektroden und ihre jeweiligen Stromkollektoren sind bandförmig ausgebildet und liegen innerhalb der Elektroden-Separator-Verbünde spiralförmig gewickelt vor.

Vorzugsweise sind die vorgenannten Merkmale a. und b. in Kombination miteinander verwirklicht. Da das erfindungsgemäße Verfahren auf der Basis der induktiven Wärmeübertragung wesentlich direkter und schneller als herkömmliche Verfahren durchgeführt werden kann und keine Kontaktwärme wie bei herkömmlichen Ofenprozessen erforderlich ist, ist das erfindungsgemäße Verfahren sehr flexibel im Herstellungsprozess von Energiespeicherelementen einsetzbar. Prinzipiell kann das erfindungsgemäße Verfahren auch für ein reines Elektrodentrocknen eingesetzt werden. In besonders bevorzugterweise werden jedoch mit dem erfindungsgemäßen Verfahren bereits gewickelte Elektroden-Separator-Verbünde getrocknet.

In einer ganz besonders bevorzugten Ausführungsform zeichnet sich das erfindungsgemäße Verfahren durch die folgenden zusätzlichen Merkmale aus:
a. Die negative Elektrode und die positive Elektrode sind innerhalb der Elektroden-Separator-Verbünde derart angeordnet, dass ein Längsrand des Anodenstromkollektors aus einer der endständigen Stirnseiten und ein Längsrand des Kathodenstromkollektors aus der anderen der endständigen Stirnseiten austritt.
b. Auf mindestens einer der Stirnseiten ist ein Kontaktelement, insbesondere ein Kontaktblech, angebracht, das mindestens 50 % der jeweiligen Stirnseite bedeckt.

Vorzugsweise sind die vorgenannten Merkmale a. und b. in Kombination miteinander verwirklicht.

Die Anwendung der erfindungsgemäßen Trocknungsbehandlung für Energiespeicherelemente im an sich bekannten, sogenannten Kontaktplattendesign gemäß den vorgenannten Merkmalen a. und b. bietet besondere Vorteile, da das Kontaktelement, beispielsweise ein Kontaktblech, das in direktem Kontakt mit einem der Stromkollektoren steht, die induktive Erwärmung wesentlich befördert.

Ein derartiges Kontaktplattendesign geht beispielsweise aus der WO 2017/215900 A1 hervor. Hier sind zylindrische Rundzellen mit einem wickelförmigen Elektroden-Separator-Verbund beschrieben. Die entgegengesetzt gepolten Elektroden sind innerhalb des Elektroden-Separator-Verbunds versetzt zueinander angeordnet, so dass Längsränder der Stromkollektoren der positiven Elektroden an einer Stirnseite und Längsränder der Stromkollektoren der negativen Elektroden an der anderen Stirnseite des Wickels austreten. Zur elektrischen Kontaktierung der Stromkollektoren weist die Zelle eine Kontaktplatte auf, die auf einer Stirnseite des Wickels aufsitzt und mit einem Längsrand eines der Stromkollektoren, beispielsweise durch Verschweißung, verbunden ist. Dadurch ist es möglich, den Stromkollektor und damit auch die dazugehörige Elektrode über seine bzw. ihre gesamte Länge elektrisch zu kontaktieren. Hierdurch kann der Innenwiderstand innerhalb der Zelle deutlich gesenkt werden. Das Auftreten großer Ströme kann im Vergleich zu herkömmlichen Zellen sehr viel besser abgefangen und auch Wärme besser aus dem Wickel abgeführt werden.

Das Kontaktplattendesign der Elektroden-Separator-Verbünde, die erfindungsgemäß getrocknet werden können, kann beispielsweise so ausgebildet sein, dass das Kontaktelement insbesondere als Kontaktblech oder als metallische Platte ausgebildet ist, wobei auch Durchbrechungen der Platte vorgesehen sein können, so dass nur ein gewisser Anteil der jeweiligen Stirnseite mit dem Kontaktelement bedeckt ist, beispielsweise 50 % oder vorzugsweise mehr.

Das Kontaktelement kann beispielsweise aus Nickel oder Kupfer oder Titan oder einer Nickel- oder Kupfer- oder Titanlegierung oder aus Edelstahl oder aus nickelplattiertem Kupfer bestehen. Diese Materialien sind insbesondere für ein Kontaktelement bevorzugt, das mit dem Anodenstromkollektor verbunden ist. Ein Kontaktelement, das für eine Verbindung mit dem Kathodenstromkollektor vorgesehen ist, besteht vorzugsweise aus Aluminium oder einerAluminiumlegierung.

Das Kontaktelement kann beispielsweise eine gleichmäßige Dicke in einem Bereich von 50 µm bis 600 µm aufweisen, bevorzugt 150 µm bis 350 µm. Vorzugsweise hat das Kontaktelement die Form einer Scheibe oder einer polygonalen Platte. Das Kontaktelement deckt vorzugsweise 60 % oder mehr der jeweiligen Stirnseite ab und kann dabei eine Durchbrechung, insbesondere ein Loch oder einen Schlitz oder gegebenenfalls auch mehrere Löcher oder Schlitze, aufweisen.

Die Erfinder konnten feststellen, dass bei dem erfindungsgemäßen Verfahren die Erwärmung bei einem Elektroden-Separator-Verbund mit Kontaktelement wesentlich schneller und effektiver erfolgt. Dies ist vermutlich u.a. darauf zurückzuführen, dass durch das Kontaktelement mehr Masse vorhanden ist, die die magnetischen Feldlinien aufnehmen kann. Zudem lassen sich die Kontaktelement günstig zu den Feldlinien ausrichten. Im Zusammenspiel mit einem Kontaktelement erlaubt das erfindungsgemäße Verfahren daher eine besonders schnelle, effektive und gerichtete Erwärmung und damit Trocknung des Elektroden-Separator-Verbunds.

Im Hinblick auf die Platzierung der Elektroden-Separator-Verbünde in der Trocknungsvorrichtung zeichnet sich das erfindungsgemäße Verfahren in bevorzugten Ausgestaltungen durch mindestens eines der folgenden zusätzlichen Merkmale aus:
a. Bei der Platzierung der Elektroden-Separator-Verbünde in der Trocknungsvorrichtung werden die als Wickel ausgebildeten Elektroden-Separator-Verbünde parallel zueinander auf einer Trägerplatte der Trocknungsvorrichtung ausgerichtet, wobei eine der Stirnseiten des Wickels der Trägerplatte zugewandt und die andere der Stirnseiten des Wickels der Trägerplatte abgewandt ist.
b. In der Trägerplatte oder unter der Trägerplatte sind die Induktoren angeordnet.
c. Nach der Platzierung der Elektroden-Separator-Verbünde in der Trocknungsvorrichtung sind die Induktoren von den Elektroden-Separator-Verbünden durch ein Dielektrikum getrennt.

Vorzugsweise sind die vorgenannten Merkmale a. und b. und in besonders bevorzugter Weise die vorgenannten Merkmale a., b. und c. in Kombination miteinander verwirklicht.

Bei der Trägerplatte der Trocknungsvorrichtung handelt es sich vorzugsweise um einen Boden oder eine Bodenplatte innerhalb der Trocknungsvorrichtung, wobei in oder unter diesem Boden oder der Bodenplatte oder allgemein der Trägerplatte die Induktoren für die Elektroden-Separator-Verbünde angeordnet sind.

Gemäß dem vorgenannten Merkmal c. befindet sich nach der Platzierung zwischen den Elektroden-Separator-Verbünden und den Induktoren ein Dielektrikum, also ein Nichtleiter. Hierbei kann essich beispielsweise um eine Glaskeramik handeln, die die Induktoren in der Trägerplatte abdeckt. Gemäß dem Prinzip der induktiven Erwärmung erfolgt die Wärmeübertragung über elektromagnetische Feldlinien, die nur in einem metallischen Substrat eine Erwärmung induzieren, also insbesondere in den Stromkollektoren und/oder den gegebenenfalls vorhandenen Kontaktelementen der Elektroden-Separator-Verbünde. Eine abdeckende Glaskeramik oder Ähnliches wird also im Rahmen des erfindungsgemäßen Verfahrens keine Erwärmung erfahren.

In besonders bevorzugter Weise wird die Platzierung der Elektroden-Separator-Verbünde so durchgeführt, dass eine Stirnseite der Elektroden-Separator-Verbünde, die vorzugsweise mit einem Kontaktelement versehen sein kann, auf der Trägerplatte ausgerichtet wird bzw. der Trägerplatte zugewandt ist. Ganz besonders bevorzugt ist es dabei, wenn die anodische Seite des Elektroden-Separator-Verbundes der Trägerplatte mit den Induktoren zugewandt ist. In einigen Ausführungsformen kann jedoch auch die kathodische Seite des Elektroden-Separator-Verbundes der Trägerplatte mit den Induktoren zugewandt sein.

Vorzugsweise wird das anodenseitige Kontaktelement auf der Trägerplatte platziert. Bevorzugt besteht dabei das anodenseitige Kontaktelement aus Kupfer oder Nickel und/oder der Anodenstromkollektor aus Kupfer. Dies erlaubt eine besonders gute induktive Erwärmung.

Prinzipiell eignet sich das erfindungsgemäße Verfahren auch für eine Erwärmung eines kathodenseitigen Kontaktelements, das beispielsweise aus Aluminium besteht.

In weiteren Ausführungsformen kann es vorgesehen sein, dass der Elektroden-Separator-Verbund mit oder ohne Kontaktelementen zusammen mit einem Gehäusebecher, beispielsweise einem metallischen Gehäusebecher, gemäß dem erfindungsgemäßen Verfahren getrocknet wird. In bevorzugten Ausführungsformen zeichnet sich das erfindungsgemäße Verfahren daher durch mindestens eines der folgenden zusätzlichen Merkmale aus:
a. Die als Wickel ausgebildeten Elektroden-Separator-Verbünde sind in einen metallischen Gehäusebecher, der zylindrisch ausgebildet ist und einen Becherboden aufweist, eingeschoben und werden innerhalb des Gehäusebechers induktiv erwärmt.
b. Zur Platzierung der Elektroden-Separator-Verbünde werden die als Wickel ausgebildeten Elektroden-Separator-Verbünde zusammen mit dem metallischen Gehäusebecher in der Trocknungsvorrichtung platziert, sodass der Gehäuseboden des Gehäusebechers auf der Trägerplatte der Trocknungsvorrichtung steht.

Vorzugsweise sind die vorgenannten Merkmale a. und b. in Kombination miteinander verwirklicht.

Auch zusammen mit einem Gehäusebecher kann in effektiver Weise eine Trocknungsbehandlung erfolgen. Eine induktiv erzeugte Erwärmung des Bechers kann sich dabei auch auf den Elektroden-Separator-Verbund übertragen, so dass die Effektivität der Erwärmung weiter gesteigert wird. In Kombination mit einem oder zwei Kontaktelementen bei dem Elektroden-Separator-Verbund kann die Effektivität der Erwärmung noch weiter gesteigert werden, da in diesem Fall auch vor allem die im Inneren des Bechers angeordneten Kontaktelemente oder das Kontaktelement induktiverwärmt werden, so dass die Wärmeentwicklung auch im Inneren des Bechers erfolgt. Die Energiezufuhr ist durch das induktive Verfahren sehr direkt, so dass es nur einer minimalen elektrischen Leistung bedarf, um den Trocknungsprozess optimal durchzuführen.

Eine Trocknungsbehandlung nur für den Elektroden-Separator-Verbund oder nur für den Elektroden-Separator-Verbund mit einem oder zwei Kontaktelementen hat gegenüber einer Erwärmung des Elektroden-Separator-Verbundes innerhalb eines Bechers den besonderen Vorteil, dass keine Energie fürdie Erwärmungdes Bechers aufgewendet werden muss. Dies kann unter Umständen vorteilhaft sein. Es sind jedoch auch Fälle möglich, bei denen es auch aus produktionstechnischen Gründen günstig ist, den Elektroden-Separator-Verbund innerhalb des Gehäusebechers der Trocknungsbehandlungzu unterziehen. Da das erfindungsgemäße Verfahren allgemein sehr effizient und dabei energie- und zeitsparend ist, bietet auch diese Vorgehensweise im Vergleich mit herkömmlichen Verfahren Vorteile.

Ein besonderer Vorteil des erfindungsgemäßen Verfahrens ist, dass über die einzelnen Induktoren, die jeweils den zu behandelnden Elektroden-Separator-Verbünden zugeordnet sind, eine sehr gezielte und individuell einstellbare Erwärmung bei den einzelnen Elektroden-Separator-Verbünden möglich ist. In besonders bevorzugten Ausgestaltungen des erfindungsgemäßen Verfahrens ist in diesem Zusammenhang mindestens eines der folgenden zusätzlichen Merkmale vorgesehen:
a. Die einzelnen Induktoren werden geregelt betrieben.
b. Mindestens eine Leistungsgröße in den einzelnen Induktoren wird gemessen.

Vorzugsweise sind die vorgenannten Merkmale a. und b. in Kombination miteinander verwirklicht.

Durch einen geregelten Betrieb der einzelnen Induktoren ist es möglich, die durch die Anordnung im Batch unter Umständen auftretende ungleichmäßige Wärmezufuhr auszugleichen, so dass es im Inneren des Batches beispielsweise nicht zur Entwicklung von Hotspots oder anderen ungleichmäßigen Wärmeverteilungen über das gesamte Batch kommt. In anderen Ausführungsformen kann jedoch auch auf eine Regelung verzichtet werden. Es kann auch vorgesehen sein, dass mehrere Induktoren gemeinsam geschaltet und/oder geregelt werden.

Bei herkömmlichen Verfahren kann innerhalb eines Batches nicht sichergestellt werden, dass jeder einzelne Elektrodenverbund die gleiche Wärme aufnimmt. Das kann von Unebenheiten kommen oder allgemein davon, dass die eingebrachte Energie nicht alle Zellen gleich erreichen kann.

Durch eine Leistungsmessung, beispielsweise eine Strommessung oder eine Temperaturmessung, in den einzelnen Induktoren oder gegebenenfalls in einer Gruppe von Induktoren kann überprüft werden, ob die Erwärmung in dem oder den jeweiligen zugeordneten Elektroden-Separator-Verbund/Verbünden in der vorgesehenen Weise tatsächlich optimal erfolgt ist. Über eine solche Leistungsmessung ist also eine Qualitätskontrolle möglich, so dass für alle Elektroden-Separator-Verbünde in dem gesamten Batch eine ausreichende und zuverlässige Erwärmung und Trocknungsbehandlung sichergestellt werden kann. Auch eine nicht genügende Trocknungsbehandlung bei einzelnen Elektroden-Separator-Verbünden kann im Sinne einer Qualitätskontrolle auf diese Weise gegebenenfalls festgestellt werden und die entsprechenden Elektroden-Separator-Verbünde gegebenenfalls aussortiert werden.

Im Hinblick auf die Induktoren zeichnet sich das erfindungsgemäße Verfahren durch mindestens eines der folgenden zusätzlichen Merkmale aus:
a. Die Induktoren sind Induktionsspulen.
b. Der Durchmesser der Induktoren, insbesondere der Induktionsspulen, und der Durchmesser der Elektroden-Separator-Verbünde, insbesondere der als Wickel mit der zylindrischen Grundform ausgebildeten Elektroden-Separator-Verbünde, weichen um maximal 20 % voneinander ab.

Vorzugsweise sind die vorgenannten Merkmale a. und b. in Kombination miteinander verwirklicht.

Als Induktoren eignen sich grundsätzlich alle Einrichtungen, die dazu geeignet sind, ein elektrisches Wechselfeld zu erzeugen, das in einem metallischen Substrat einen Wirbelstrom induzieren kann. Besonders bevorzugt handelt es sich bei den Induktoren um Induktionsspulen, insbesondere um Spulen mit mehreren Spulenwindungen, oder aber um Induktionseinrichtungen, die jeweils mindestens eine solche Spule umfassen. Die Induktionsspulen sind vorzugsweise flächig und spiralförmig gewickelt und bestehen in bevorzugten Ausführungsformen im Wesentlichen beispielsweise aus Kupferdraht oder beschichtetem Kupferdraht.

Durch die Anpassung des Durchmessers der Induktoren, insbesondere der Induktionsspulen, an den Durchmesser der zu behandelnden Elektroden-Separator-Verbünde kann eine besonders effektive Energieausnutzung erreicht werden. Da das Verfahren jedoch insgesamt ohne sehr effizient arbeitet, sind auch gewisse Abweichungen in der Passung zwischen den Induktoren und den Elektroden-Separator-Verbünden akzeptabel. Beispielsweise ist eine Varianz von 20 % bei den Durchmessern durchaus noch geeignet, um dennoch sehr energiesparend und schnell die Trocknungsbehandlung durchzuführen.

Gegebenenfalls können auch größere Abweichungen zwischen den Durchmessern der Induktoren und der Elektroden-Separator-Verbünde akzeptabel sein. Hierdurch wird es möglich, Elektroden-Separator-Verbünde unterschiedlicher Dimensionen mit derselben Trocknungsvorrichtung zu behandeln.

Das erfindungsgemäße Verfahren eignet sich insbesondere für eine thermische Trocknungsbehandlung, die unmittelbar vor einer Tränkung der Elektroden-Separator-Verbünde mit einem Elektrolyten im Zuge des Herstellungsprozesses der Energiespeicherelemente durchgeführt wird. Insbesondere bei diesem Schritt, also vor der Tränkung mit einem Elektrolyten, sollte jegliche Restfeuchte aus den Elektroden-Separator-Verbünden entfernt werden. Die Restfeuchte, die erfindungsgemäß entfernt werden kann, kann beispielsweise bei einer Zwischenlagerung der Elektroden-Separator-Verbünde während des Herstellungsprozesses in die Elektroden-Separator-Verbünde eingedrungen sein. Durch das erfindungsgemäße Verfahren kann der Schritt der Nachtrocknung in besonders zeit- und energiesparender Weise durchgeführt werden.

Das erfindungsgemäße Verfahren eignet sich vor allem für Rundzellen, da hierbei eine optimale runde Spulenform der Induktoren ausgenutzt werden kann, die dem runden Querschnitt einer Rundzelle entspricht.

In besonderer Weise eignet sich das erfindungsgemäße Verfahren zum Einsatz im Produktionsprozess von Lithium-lonen-Zellen, vorzugsweise von Lithium-lonen-Rundzellen, und kann vor allem auch in der Massenproduktion eingesetzt werden. Insbesondere in Massenproduktionsprozessen kommen die Energie- und Zeiteinsparungspotenziale des erfindungsgemäßen Verfahrens besonders zum Tragen.

Die Erfindung umfasst weiterhin eine Trocknungsvorrichtung zur Durchführung einer thermischen Trocknungsbehandlung gemäß dem beschriebenen Verfahren. Diese Trocknungsvorrichtung zeichnet sich durch die folgenden Merkmale aus:
a. Die Trocknungsvorrichtung umfasst mindestens eine Vakuumkammer.
b. Die Trocknungsvorrichtung umfasst eine Mehrzahl von Induktoren, insbesondere von Induktionsspulen, bevorzugt in einer regelmäßigen Anordnung.
c. Die Trocknungsvorrichtung umfasst mindestens eine Einrichtung zur Beaufschlagung der Induktoren mit Strom.

Eine Vakuumkammer einer erfindungsgemäßen Trocknungsvorrichtung wird bevorzugt durch eine

Vakuumhaube, bevorzugt durch eine absenkbare Vakuumhaube, definiert, die einen oder mehrere der zu trocknenden Elektroden-Separator-Verbünde umschließen kann so dass dieser oder diese einem entsprechenden Unterdruck ausgesetzt werden kann bzw. können. In vielen Fällen ist es bevorzugt, dass eine Mehrzahl von Elektroden-Separator-Verbünden gemeinsam in einerVakuumkammerangeordnet werden, also von einer Vakuumhaube umschlossen werden. Die erfindungsgemäße Vorrichtung kann aber auch für jeden der zu trocknenden Elektroden-Separator-Verbünde eine eigene Haube umfassen. Jeder der Elektroden-Separator-Verbünde wird in diesem Fall in einer eigenen Vakuumkammer angeordnet.

Bezüglich weiterer Einzelheiten dieser Trocknungsvorrichtung wird auch auf das oben beschriebenen Verfahren verwiesen, das mit einer solchen Trocknungsvorrichtung durchgeführt werden kann.

Die Einrichtung zur Beaufschlagung der Induktoren mit Strom umfasst vorzugsweise eine Ansteuerungseinrichtung für die einzelnen Induktoren oder gegebenenfalls für eine Mehrzahl von Induktoren, sodass die Induktoren individuell oder in Gruppen jeweils mit einer geeigneten Wechselstromfrequenz betrieben werden können. Je nach Ausgestaltung der Trocknungsvorrichtung können gegebenenfalls auch alle Induktoren mit der gleichen Frequenz und gemeinsam angesteuert werden.

In besonders bevorzugter Weise zeichnet sich die erfindungsgemäße Trocknungsvorrichtung durch das folgende zusätzliche Merkmal aus:
a. Die Induktoren sind in einer Trägerplatte der Trocknungsvorrichtung angeordnet, vorzugsweise in die Trägerplatte eingegossen, oder unter einer Trägerplatte der Trocknungsvorrichtung angeordnet.

Wie oben bereits erläutert, handelt es sich bei den Induktoren vorzugsweise um an sich bekannte Induktionsspulen, die in der Trägerplatte, beispielsweise einer Bodenplatte, der Trocknungsvorrichtung angeordnet sind. Dabei können die Spulen von einer Platte oder einer Schicht aus elektrisch nichtleitendem Material, beispielsweise einer Glaskeramik, überdeckt sein. Bei den Induktoren selbst handelt es sich vorzugsweise um flach gewickelte Induktionsspulen, insbesondere aus Kupferdraht. Gegebenenfalls können die Induktionsspule mit einem Ferritkern ausgestattet sein, um die magnetischen Feldlinien noch besser zu auf die zu behandelnden Elektroden-Separator-Verbünde fokussieren zu können. Insbesondere in diesem Fall ist eine flache Wicklung der Induktionsspulen nicht erforderlich.

Im Hinblick auf die Beschickung und die Platzierung der zu behandelnden Elektroden-Separator-Verbünde zeichnet sich die erfindungsgemäße Trocknungsvorrichtung in bevorzugten Ausführungsformen durch mindestens eines der folgenden zusätzlichen Merkmale aus:
a. Die Trocknungsvorrichtung umfasst Transportmittel zum Einbringen und/oder zum Ausbringen der zu behandelnden Elektroden-Separator-Verbünde in die und/oder aus der Trocknungsvorrichtung,
b. die Trocknungsvorrichtung umfasst Mittel zur Platzierung der zu behandelnden Elektroden-Separator-Verbünde in Zuordnung zu den einzelnen Induktoren,
c. die Trocknungsvorrichtung umfasst Trägermittel zur Halterung der zu behandelnden Elektroden-Separator-Verbünde.

Vorzugsweise sind die vorgenannten Merkmale a. und b. oder a. und c. oder b. und c .oder a. und b. und c. in Kombination miteinander verwirklicht.

Bei den Transportmitteln kann es sich beispielsweise um einen oder mehrere Schieber handeln, mit dem oder den die einzelnen Elektroden-Separator-Verbünde in das Innere der Trocknungsvorrichtung eingeschoben werden. Die Induktoren in oder unter der Trägerplatte der Trocknungsvorrichtung können so angeordnet sein, dass bei dem Einschieben der Elektroden-Separator-Verbünde bei maximaler Packung der Elektroden-Separator-Verbünde jeweils ein Induktor einem Elektroden-Separator-Verbund zugeordnet ist bzw. dass der Elektroden-Separator-Verbund direkt oberhalb eines Induktors auf der Trägerplatte platziert wird. Diese genaue Ausrichtung der Elektroden-Separator-Verbünde kann beispielsweise durch entsprechende seitliche Banden oder Anschläge unterstützt werden, die eine korrekte Platzierung der Elektroden-Separator-Verbünde vereinfachen.

Eine korrekte Platzierung der Elektroden-Separator-Verbünde auf der Trägerplatte der Trocknungsvorrichtung kann auch mithilfe von anderen Mitteln, beispielsweise mithilfe eines Greifers, unterstützt werden. Ein Greifer kann dabei so eingesetzt werden, dass jeweils ein oder mehrere Elektroden-Separator-Verbünde gegriffen und an der richtigen Position der Trägerplatte abstellt werden.

Weiterhin können Trägermittel zur Halterung vorgesehen sein, beispielsweise Transportbecher oder Transportpaletten oder Ähnliches, mit deren Hilfe die Platzierung und Halterung erleichtert wird. Die Trägermittel können als Einzel- oder als Mehrfachhalterungen für mehrere Elektroden-Separator-Verbünde ausgebildet sein. Vorzugsweise können derartige Trägermittel aus Kunststoff oder anderen nichtmetallischen und vorzugsweise nicht oder gering wärmeleitenden Materialien gefertigt sein, damit sie nicht mit der induktiven Erwärmung wechselwirken. Die Verwendung von derartigen Trägermitteln, beispielsweise von Transportbechern, kann insbesondere bei einer Trocknungsbehandlung der reinen Elektroden-Separator-Verbünde, mit oder ohne Kontaktelementen, hilfreich sein, da hierdurch die empfindlichen Elektroden-Separator-Verbünde während der Trocknungsbehandlung nicht direkt berührt werden müssen.

Vorzugsweise kann jeder Induktor individuell oder gegebenenfalls als Gruppe geschaltet und vorzugsweise geregelt werden.

In besonders vorteilhaften Ausführungsformen umfasst die Trocknungsvorrichtung eine Einrichtung zur Leistungsmessung der Induktoren, wobei vorzugsweise für jeden einzelnen Induktor oder gegebenenfalls für eine Gruppe von Induktoren eine Leistungsmessung vorgesehen sein kann. Als Leistungsmessung kann beispielsweise der aufgenommene Strom und/oder die Temperatur und/oder die Zeit gemessen werden. In jedem Induktor kann beispielsweise ein Sensor zur Temperaturmessung integriert sein. Durch eine Leistungsmessung ist der Verlauf der Trocknungsbehandlung prinzipiell für jeden einzelnen Elektroden-Separator-Verbund erfassbar und auch im Sinne einer Qualitätskontrolle nachverfolgbar. Eine solche Leistungsmessung erlaubt darüber hinaus einen geregelten Betrieb der einzelnen Induktoren, so dass beispielsweise eine homogene und gleichmäßige Trocknungsbehandlung über einen gesamten Batch sichergestellt werden kann.

Eine Leistungsmessung kann auch dafür verwendet werden, die benötigte Energiemenge für einen Elektroden-Separator-Verbund an einer bestimmten Position innerhalb des Batches bzw. an einer bestimmten Position auf der Trägerplatte der Trocknungsvorrichtung initial zu vermessen. Anschließend kann der Induktor für die nachfolgenden Trocknungsvorgänge entsprechend eingestellt werden, so dass eine gleichbleibende Qualität bei der Trocknung gewährleistet ist, ohne bei jedem Trocknungsprozess die entsprechenden Werte erfassen zu müssen.

In weiteren bevorzugten Ausführungsformen der erfindungsgemäßen Trocknungsvorrichtung kann jedem Induktor ein selbstschwingender Resonanzwandler zugeordnet sein. Beispielsweise kann ein selbstschwingender Royer-Konverter verwendet werden. Der Resonanzwandler kann selbst- oder fremdgesteuert sein, er arbeitet unabhängig von der Art der Steuerung in der Regel effizient und verursacht nur wenige EMV-Störungen. In einigen Ausführungsformen ist der fremdgesteuerte Resonanzwandler bevorzugt, da er in Bezug über die Frequenz besser regelbar ist.

Weitere Merkmale und Vorteile der Erfindung ergeben sich aus der nachfolgenden Beschreibung von Ausführungsbeispielen im Zusammenhang mit den Zeichnungen. Hierbei können die einzelnen Merkmale jeweils für sich oder in Kombination miteinander verwirklicht sein.

### KURZBESCHREIBUNG DER ZEICHNUNGEN

In den Zeichnungen zeigen:
- Fig. 1: schematische Darstellung von an dem erfindungsgemäßen Verfahren beteiligten Komponenten;
- Fig. 2A, B: Schnittdarstellungen der in eine Trägerplatte einer Trocknungsvorrichtung eingebrachten Induktoren; und
- Fig. 3: schematische Aufsicht auf die Trägerplatte einer Trocknungsvorrichtung.

### DETAILLIERTE BESCHREIBUNG DER AUSFÜHRUNGSBEISPIELE

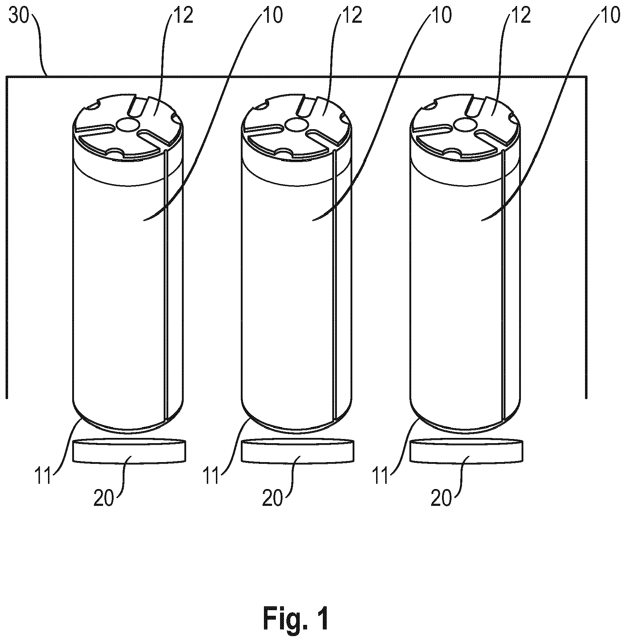

Aus **Fig. 1** gehen einige Komponenten für die Durchführung des erfindungsgemäßen Verfahrens hervor, wobei eine Mehrzahl von Elektroden-Separator-Verbünden 10 gleichzeitig einer thermischen Trocknungsbehandlung auf der Basis einer induktiven Erwärmung unterzogen werden. Ein wichtiger Punkt des Verfahrens ist dabei, dass jedem zu behandelnden Elektroden-Separator-Verbund 10 genau ein Induktor 20 zugeordnet wird. Die thermische Trocknungsbehandlung wird in einem Vakuum durchgeführt, wobei in dem hier gezeigten Ausführungsbeispiel zur Erzeugung des Vakuums eine Vakuumhaube 30 innerhalb einer entsprechenden Trocknungseinrichtung über die zu behandelnden Elektroden-Separator-Verbünde 10 abgesenkt wird.

Bei den hier gezeigten, zu behandelnden Elektroden-Separator-Verbünden 10 handelt es sich um Wickel mit einerzylindrischen Grundform und zwei endständigen Stirnseiten, die aus bandförmigen Elektroden und einem dazwischenliegenden Separator in an sich bekannter Weise gebildet sind. An den Stirnseiten der hier gezeigten Elektroden-Separator-Verbünde 10 befindet sich jeweils ein plattenförmig ausgebildetes Kontaktelement 11,12. Die Kontaktelemente 11 und 12 sind jeweils an hervorstehenden Längsränder der Stromkollektoren angeschweißt und so mit den Elektroden verbunden. Das Kontaktelement 11 auf der unteren Stirnseite des Elektroden-Separator-Verbunds ist dabei mit dem Anodenstromkollektor verbunden. Das Kontaktelement 12 auf der oberen Seite des Elektroden-Separator-Verbunds 10 ist dabei mit dem Kathodenstromkollektor verbunden.

Bei der Platzierung der Elektroden-Separator-Verbünde 10 in Zuordnung zu den einzelnen Induktoren 20 wird in dieser bevorzugten Ausführungsform jeweils das anodenseitige Kontaktelement 11 im Wirkbereich des jeweiligen Induktors 20 platziert. Auf diese Weise wird eine besonders gute induktive Wärmeübertragung erreicht, da die Erwärmung des anodenseitigen Kontaktelements 11 direkt auf den Anodenstromkollektor übertragen wird. Der Anodenstromkollektor ist vorzugsweise aus Kupferfolie gebildet. Kupfer weist besonders gute Wärmeleitungseigenschaften auf, sodass die thermische Trocknungsbehandlung in dieser Ausführungsform besonders effektiv ist. Auch das anodenseitige Kontaktelement 11 ist vorzugsweise aus Kupfer oder aus Nickel gefertigt.

In dem hier gezeigten Ausführungsbeispiel erfolgt die induktive Erwärmung im Wesentlichen von unten. Prinzipiell ist es jedoch auch möglich, die induktive Erwärmung von oben oder alternativ von unten und oben auszuführen.

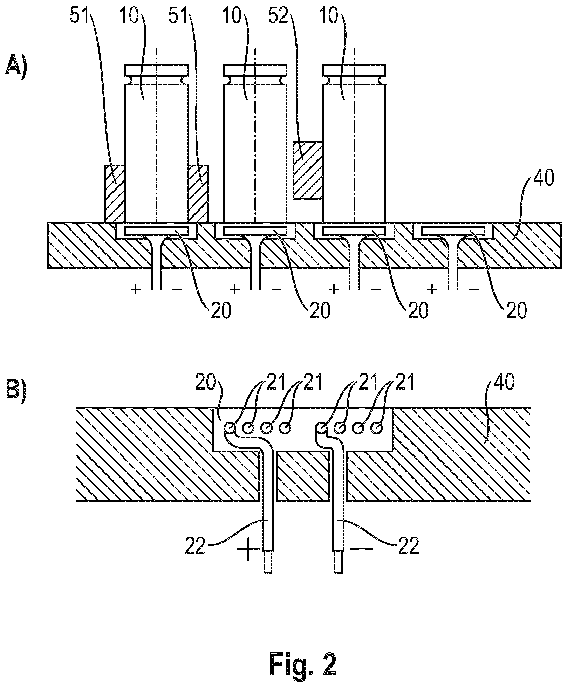

Fig. 2 zeigt Schnittdarstellungen durch die Trägerplatte 40 einer erfindungsgemäßen Trocknungsvorrichtung mit darin eingefügten Induktoren 20 in Form von Induktionsspulen.

**Fig. 2A** zeigt die Trägerplatte 40 mit mehreren darin eingelassenen Induktionsspulen 20. Die Induktionsspulen 20 können dabei beispielsweise in eine Glaskeramik eingegossen sein. Oberhalb der Trägerplatte 40 mit den Induktionsspulen 20 sind die zu behandelnden Elektroden-Separator-Verbünde 10 aufgestellt. In dem hier gezeigten Ausführungsbeispiel befinden sich die Elektroden-Separator-Verbünde 10 jeweils in einem zylindrischen Gehäusebecher.

Zur Vereinfachung der Handhabung der Elektroden-Separator-Verbünde 10 während der Durchführung der Trocknungsbehandlung sind in dem hier gezeigten Ausführungsbeispiel zwei unterschiedliche Trägermittel 51, 52 zur Halterung der Elektroden-Separator-Verbünde dargestellt. Bei den Trägermitteln 51 handelt es sich um einen Produkt- oder Transportbecher insbesondere aus Kunststoff, der die Handhabung und die Halterung des Elektroden-Separator-Verbunds 10 vereinfacht. Bei dem Trägermittel 52 handelt es sich um einen Abstandhalter, der einen geeigneten Abstand zwischen den einzelnen Elektroden-Separator-Verbünden 10 während der Trocknungsbehandlung und dem Ein- und Ausbringen der Elektroden-Separator-Verbünde 10 in und aus der Trocknungsvorrichtung sicherstellt. Hierdurch wird insbesondere vermieden, dass sich die Elektroden-Separator-Verbünde 10 gegenseitig berühren und gegebenenfalls beschädigen können.

Mithilfe der Haltemittel 51, 52 können die einzelnen Elektroden-Separator-Verbünde 10 in einfacher Weise aufrecht gehalten werden. Alternativ kann beispielsweise eine Halteeinrichtung, vorzugsweise aus Kunststoff, für eine Mehrzahl von zu behandelnden Elektroden-Separator-Verbünden 10 verwendet werden. Eine solche Halteeinrichtung kann beispielsweise nach unten hin, also in Richtung der Induktoren 20, offen sein, um eine optimale induktive Erwärmung zu ermöglichen.

Die Verwendung von entsprechenden Halterungen erlaubt insbesondere eine kontaktlose Positionierung der Elektroden-Separator-Verbünde 10 oberhalb der Induktoren 20. Hierdurch wird vermieden, dass die Elektroden-Separator-Verbünde über die Bodenplatte schaben und es dadurch zu Beschädigungen an den Elektroden-Separator-Verbünden 10 kommt.

**Fig. 2B** zeigt eine einzelne Induktionsspule 20 im Detail, wobei die einzelnen Wicklungen 21 der Induktionsspule 20 und die elektrische Anbindung 22 der Induktionsspule 20 dargestellt sind. Über die elektrische Anbindung 22 kann die Induktionsspule 20 mit einem Wechselstrom, vorzugsweise in geregelter Form, betrieben werden.

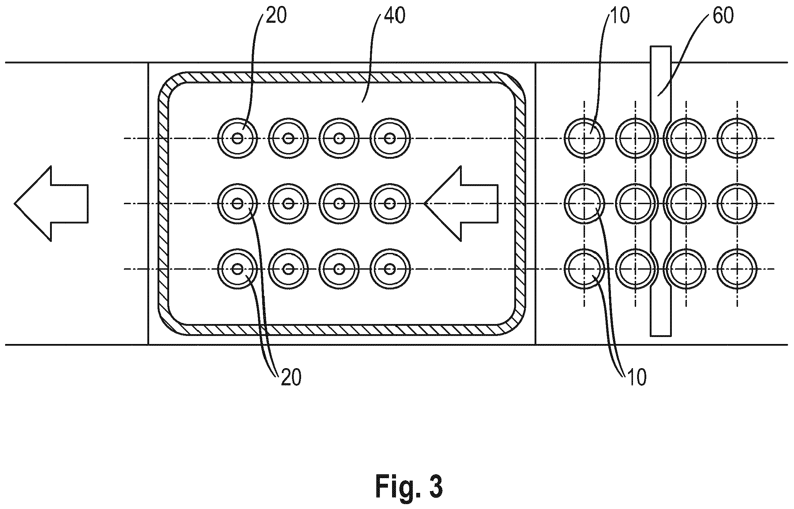

**Fig. 3** zeigt eine schematische Aufsicht auf die Trägerplatte 40 einer Trocknungseinrichtung mit einer regelmäßigen Anordnung der angedeuteten Induktionsspulen 20. Zur Durchführung der erfindungsgemäßen thermischen Trocknungsbehandlung wird oberhalb dieser Induktionsspulen 20 eine entsprechende Anzahl von zu behandelnden Elektroden-Separator-Verbünden 10 platziert. Hierfür wird beispielsweise ein längliches Greiferelement 60 mit halbrunden Aussparungen verwendet, mit dem die Elektroden-Separator-Verbünde 10 auf den Induktionsspulen 20 in der korrekten Position abgesetzt werden können, so dass anschließend die Trocknungsbehandlung durch Anlegen eines Wechselstroms mit entsprechender Frequenz an den Induktionsspulen 10 durchgeführt werden kann. Alternativ zu einem Greifersystem kann beispielsweise auch ein Förderbandsystem oder ein Schieber verwendet werden.

In bevorzugten Ausführungsformen können die Induktionsspulen 20 einen Ferritkern, zum Beispiel in Form einer Schalenkern-Hälfte, aufweisen. Hierdurch können die magnetischen Feldlinien noch besser auf den zu behandelnden Elektroden-Separator-Verbund 10 fokussiert werden. In anderen Ausführungsformen kann der Spulenkern auch offen sein.

Während derTrocknungsbehandlung kann vorzugsweise jede Induktionsspule 20 separat mit einer geeigneten Frequenz angesteuert werden, so dass die einzelnen Elektroden-Separator-Verbünde 10 im Prinzip individuell getrocknet werden können. Dies kann besonders vorteilhaft sein, wenn es bei einer größeren Menge von zu behandelnden Elektroden-Separator-Verbünden 10 zu einer unterschiedlichen Wärmeverteilung innerhalb des Batches kommt.

Prinzipiell ist es möglich, dass auch mehrere Induktoren bzw. Induktionsspulen 20 gemeinsam angesteuert werden. Besondere Möglichkeiten ergeben sich jedoch aus einer individuellen Ansteuerung der einzelnen Induktoren, die ein individuelles Heizen der Elektroden-Separator-Verbünde erlauben. Auf diese Weise kann beispielsweise auch unterschiedlichen Anforderungen an das Heizen von verschiedenen Elektroden-Separator-Verbünden, die unterschiedlich ausgestaltet sein können, Rechnung getragen werden. Somit können beispielsweise verschiedene Zellvarianten in einem Batch jeweils optimal getrocknet werden.

## Patentansprüche

1. Verfahren zur thermischen Trocknungsbehandlung einer Mehrzahl von Elektroden-Separator-Verbünden (10) mit jeweils mindestens einer negativen und mindestens einer positiven Elektrode, die jeweils einen mit Elektrodenaktivmaterial beschichteten metallischen Stromkollektor, nämlich einen Anodenstromkollektor und einen Kathodenstromkollektor, umfassen, wobei die thermische Trocknungsbehandlung mittels Induktoren (20) erfolgt, mit welchen die Elektroden-Separator-Verbünde (10) induktiv erwärmt werden, mit den folgenden Schritten:
a. Die Mehrzahl von Elektroden-Separator-Verbünden (10) wird in einer Trocknungsvorrichtung im Wirkbereich der Induktoren (20) platziert,
b. für die thermische Trocknungsbehandlung wird ein Vakuum angelegt,
c. die Induktoren (20) werden mit Strom beaufschlagt,
**dadurch gekennzeichnet, dass**
d. jeder der zu trocknenden Elektroden-Separator-Verbünde (10) in der Trocknungsvorrichtung genau einem Induktor (20) zugeordnet wird.

2. Verfahren nach Anspruch 1 mit mindestens einem der folgenden zusätzlichen Merkmale:
a. Die Elektroden-Separator-Verbünde (10) werden auf eine Temperatur oberhalb von 99 °C und unterhalb der Schmelztemperatur des Separators der Elektroden-Separator-Verbünde erwärmt,
b. die Elektroden-Separator-Verbünde (10) werden auf eine Temperatur in einem Bereich von 100 °C bis 110 °C erwärmt.

3. Verfahren nach Anspruch 1 oder Anspruch 2 mit mindestens einem der folgenden zusätzlichen Merkmale:
a. Die Elektroden-Separator-Verbünde (10) sind jeweils als Wickel ausgebildet und weisen eine zylindrische Grundform mit zwei endständigen Stirnseiten auf,
b. die Elektroden und ihre jeweiligen Stromkollektoren sind bandförmig ausgebildet und liegen innerhalb der Elektroden-Separator-Verbünde (10) spiralförmig gewickelt vor.

4. Verfahren nach Anspruch 3 mit den folgenden zusätzlichen Merkmalen:
a. Die negative Elektrode und die positive Elektrode sind innerhalb der Elektroden-Separator-Verbünde (10) derart angeordnet, dass ein Längsrand des Anodenstromkollektors aus einer der endständigen Stirnseiten und ein Längsrand des Kathodenstromkollektors aus der anderen der endständigen Stirnseiten austritt,
b. auf mindestens einer der Stirnseiten ist ein Kontaktelement (11, 12), insbesondere ein Kontaktblech, angebracht, das mindestens 50 % der jeweiligen Stirnseite bedeckt.

5. Verfahren nach Anspruch 3 oder Anspruch 4 mit mindestens einem der folgenden zusätzlichen Merkmale:
a. Bei der Platzierung der Elektroden-Separator-Verbünde (10) in der Trocknungsvorrichtung werden die als Wickel ausgebildeten Elektroden-Separator-Verbünde (10) parallel zueinander auf einer Trägerplatte (40) der Trocknungsvorrichtung ausgerichtet, wobei eine der Stirnseiten des Wickels der Trägerplatte (40) zugewandt und die andere der Stirnseiten des Wickels der Trägerplatte (40) abgewandt ist,
b. in der Trägerplatte (40) oder unter der Trägerplatte (40) sind die Induktoren (20) angeordnet,
c. nach der Platzierung der Elektroden-Separator-Verbünde (10) in der Trocknungsvorrichtung sind die Induktoren (20) von den Elektroden-Separator-Verbünden (10) durch ein Dielektrikum getrennt.

6. Verfahren nach Anspruch 5 mit mindestens einem der folgenden zusätzlichen Merkmale:
a. Die als Wickel ausgebildeten Elektroden-Separator-Verbünde (10) sind in einen metallischen Gehäusebecher, der zylindrisch ausgebildet ist und einen Becherboden aufweist, eingeschoben und werden innerhalb des Gehäusebechers induktiv erwärmt,
b. zur Platzierung der Elektroden-Separator-Verbünde (10) werden die als Wickel ausgebildeten Elektroden-Separator-Verbünde zusammen mit dem metallischen Gehäusebecher in der Trocknungsvorrichtung platziert, sodass der Gehäuseboden des Gehäusebechers auf der Trägerplatte (40) der Trocknungsvorrichtung steht.

7. Verfahren nach einem der vorhergehenden Ansprüche mit mindestens einem der folgenden zusätzlichen Merkmale:
a. Die einzelnen Induktoren (20) werden geregelt betrieben,
b. Mindestens eine Leistungsgröße in den einzelnen Induktoren (20) wird gemessen.

8. Verfahren nach einem der vorhergehenden Ansprüche mit mindestens einem der folgenden zusätzlichen Merkmale:
a. Die Induktoren (20) sind Induktionsspulen,
b. der Durchmesser der Induktoren (20) und der Durchmesser der Elektroden-Separator-Verbünde (10) weichen um maximal 20 % voneinander ab.

9. Verfahren nach einem der vorhergehenden Ansprüche mit dem folgenden zusätzlichen Merkmal:
a. Die thermische Trocknungsbehandlung erfolgt unmittelbar vor einer Tränkung der Elektroden-Separator-Verbünde (10) mit einem Elektrolyten.

10. Trocknungsvorrichtung zur Durchführung einer thermischen Trocknungsbehandlung gemäß dem Verfahren nach einem der Ansprüche 1 bis 9 mit den folgenden Merkmalen:
a. Die Trocknungsvorrichtung umfasst mindestens eine Vakuumkammer,
b. die Trocknungsvorrichtung umfasst eine Mehrzahl von Induktoren (20), insbesondere von Induktionsspulen, bevorzugt in einer regelmäßigen Anordnung,
c. die Trocknungsvorrichtung umfasst mindestens eine Einrichtung zur Beaufschlagung der Induktoren mit Strom.

11. Trocknungsvorrichtung nach Anspruch 10 mit dem folgenden zusätzlichen Merkmal:
a. Die Induktoren (20) sind in einer Trägerplatte (40) der Trocknungsvorrichtung angeordnet, vorzugsweise in die Trägerplatte (40) eingegossen, oder unter einer Trägerplatte (40) der Trocknungsvorrichtung angeordnet.

12. Trocknungsvorrichtung nach Anspruch 10 oder Anspruch 11 mit mindestens einem derfolgenden zusätzlichen Merkmale:
a. Die Trocknungsvorrichtung umfasst Transportmittel zum Einbringen und/oder zum Ausbringen der zu behandelnden Elektroden-Separator-Verbünde (10) in die und/oderaus der Trocknungsvorrichtung,
b. die Trocknungsvorrichtung umfasst Mittel zur Platzierung der zu behandelnden Elektroden-Separator-Verbünde (10) in Zuordnung zu den einzelnen Induktoren (20),
c. die Trocknungsvorrichtung umfasst Trägermittel (51, 52) zur Halterung der zu behandelnden Elektroden-Separator-Verbünde.

13. Trocknungsvorrichtung nach einem der Ansprüche 10 bis 12 mit dem folgenden zusätzlichen Merkmal:
a. Die Trocknungsvorrichtung umfasst eine Einrichtung zur Leistungsmessung der Induktoren (20).

14. Trocknungsvorrichtung nach einem der Ansprüche 10 bis 13 mit dem folgenden zusätzlichen Merkmal:
a. Jedem Induktor (20) ist ein selbstschwingender Resonanzwandler zugeordnet.
